# EUROPÄISCHE PATENTANMELDUNG

(11) **EP 1 102 282 A1**
(43) Veröffentlichungstag der Anmeldung: **23.05.2001**
(21) Anmeldenummer: 00810780.7
(22) Anmeldetag: 31.08.2000
(51) Int. Cl.: H01B 7/28, H01B 7/295

(54) **Elektrokabel**

(30) Priorität: 19.11.1999 CH 211299
(71) Anmelder: Studer Draht-und Kabelwerk AG, 4658 Däniken (CH)
(72) Erfinder: Zeley, Almos, 5430 Wettingen (CH)
(74) Vertreter: Schwander, Kuno

(57) **Zusammenfassung**

Das Elektrokabel besitzt eine doppelschichtige Aderisolierung, deren Innenschicht aus einem halogenfreien, flammwidrigen Polymernetzwerk und deren Aussenschicht mindestens zum Teil aus einem ölbeständigen Kunststoff besteht. Erfindungsgemäss besteht die Innenschicht aus einem Aluminiumhydroxid und/oder Magnesiumhydroxid enthaltenden Polyolefin und die Aussenschicht aus einem mit dem Polyolefin der Innenschicht verträglichen Polyesterelastomer und/oder einem mechanisch robusten Polymer. Die Polymere der beiden Schichten sind erfindungsgemäss so ausgewählt, dass letztere im extrudierten Zustand aneinander haften. Um die Haftung zwischen den beiden Schichten weiter zu erhöhen können dem mindestens einen Polymer der Innenschicht und/oder dem mindestens einen Polymer der Aussenschicht noch zusätzlich ein Verträglichkeitsvermittler (z. B. ein Blockcopolymer) oder ein reaktives Terpolymer, das eine Verbindung funktioneller Gruppen zwischen den Schichten erlaubt, beigemischt werden.

## Beschreibung

Die Erfindung betrifft ein Elektrokabel mit einer Isolation, welche einerseits gegenüber flüssigen Medien beständig ist und andererseits eine hohe Widerstandsfähigkeit gegenüber mechanischen Beanspruchungen aufweist. Das erfindungsgemässe Elektrokabel ist insbesondere für die Fahrzeugindustrie, die Bahn sowie auch für die Luft- und Raumfahrt bestimmt.

Elektrokabel dieser Art müssen Aderisolierungen mit speziellen Anforderungen besitzen, so müssen diese
- ölbeständig und resistent gegenüber diversen Chemikalien,
- flammwidrig und umweltfreundlich, sowie
- temperatur- und abriebbeständig
sein.

Für die Herstellung von isolierten, elektrischen Leitungen, die im Brandfall möglichst geringe Mengen Qualm sowie keine korrosiven und/oder nur geringe Mengen von toxischen Gasen freisetzen, werden bereits heute halogenfreie Isolationsmaterialien, wie zum Beispiel Polyethylen und Ethylen-Copolymere verwendet. Ebenfalls bekannt ist, dass die Lösungsmittel- und Temperaturbeständigkeit durch Vernetzung der die Kunststoffisolierung bildenden Polymere verbessert werden kann.

Die Flammwidrigkeit halogenfreier Isolationsmaterialien wird - wie ebenfalls bekannt ist - durch Zugabe von Aluminiumtrihydrat (ATH) und/oder Magnesiumhydroxid erreicht. Elektrokabel mit halogenfreien Isolationen, welche solche Hydrate enthalten, weisen in der Regel jedoch den Nachteil einer verminderten Resistenz gegenüber flüssigen Medien, wie zum Beispiel Benzin, Mineralölen und organischen Lösungsmitteln, auf. Zur Überwindung dieses Nachteils wurden bereits Elektrokabel mit einer zweischichtigen Aderisolierung entwickelt. So ist aus der schweizerischen Patentschrift 664 230 ein isolierter Leiter bekannt, der eine halogenfreie innere Isolationsschicht aus flammwidrig eingestelltem, halogenfreiem, vernetztem Polyolefin-Copolymer und eine äussere Schutzschicht aus einem Polyamid, einem thermoplastischen, halogenfreien Polyesterelastomer oder einem halogenfreien, aromatischen Polyether aufweist. Es werden also bei der Herstellung solcher Elektrokabel für die chemikalienbeständige Aussenschicht polare Polymere mit ölabweisenden Eigenschaften gewählt. Für die Innenschicht stehen hingegen Kunststoffe mit einem guten Aufnahmevermögen für Flammschutzmittel zur Verfügung. Die Polymere der beiden Isolationsschichten sind bekannterweise untereinander nicht gut verträglich, was zur Folge hat, dass die beiden Schichten der Aderisolierung nicht oder nur schlecht aufeinander haften, so dass dadurch der mechanischen Festigkeit, insbesondere der Abriebfestigkeit, unerwünschte Grenzen gesetzt werden. Darüber hinaus werden die Aderisolierungen der aus der schweizerischen Patentschrift 664 230 bekannten Elektrokabel nicht in einem einzigen Extrusionsschritt hergestellt. Diese werden vielmehr in zwei von einander unabhängigen Verfahrensschritten auf den metallischen Leiter aufgebracht, was wesentliche Nachteile für eine kostengünstige Produktion zur Folge hat.

Aufgabe der vorliegenden Erfindung ist es, ausgehend von dem aus der schweizerischen Patentschrift 664 230 bekannten isolierten Leiter, ein Elektrokabel der eingangs genannten Art vorzuschlagen, dessen zweischichtige Aderisolierung die vorgenannten Nachteile nicht aufweist.

Diese Aufgabe wird gemäss der Erfindung durch ein Elektrokabel mit den Merkmalen des Anspruchs 1 gelöst.

Vorteilhafte Ausführungsformen des erfindungsgemässen Elektrokabels gehen aus den abhängigen Ansprüchen hervor.

Die Aderisolierung des erfindungsgemässen Elektrokabels ist ein Coextrudat bestehend aus einer flammwidrigen, halogenfreien, vernetzten Polymerinnenschicht und einer mit dieser verträglichen, insbesondere an dieser haftenden bzw. mit dieser verbundenen, chemikalienbeständigen, ölabweisenden Polymeraussenschicht, die allenfalls noch zusätzlich Flammschutzmittel enthalten kann. Erfindungsgemäss weist die Innenschicht mindestens ein Polyolefin oder Polyolefin-Blend und die Aussenschicht ein Polyesterelastomer und/oder ein mechanisch robustes Polymer, wie zum Beispiel Polybutylenterphthalat (PBTP) und/oder ein High Density Polyethylen (HDPE), auf.

Ein Elektrokabel der erfindungsgemässen Art lässt sich wie folgt herstellen. Auf eine Kupferlitze, ihrerseits bestehend aus einer Vielzahl von Einzeldrähten mit einem Gesamtquerschnitt von 0,13 mm² bis 70 mm², werden durch Coextrusion die beiden Aderisolationsschichten aufgezogen, wozu zwei für die Bildung der Innen- und Aussenschicht bestimmte und zu den vorgenannten Verbindungsklassen gehörende Polymere aufweisende Ausgangsmaterialien bereitgestellt werden. Während oder nach der Extrusion wird zumindest die Innenschicht der Aderisolation durch Einwirkung energiereicher Elektronenstrahlen vernetzt.

Die Innenschicht wird mit Vorteil in einer Dicke von 0,1 bis 2 mm, vorzugsweise 0,2 bis 1,5 mm hergestellt, während die Schichtdicke der Aussenschicht verhältnismässig dünn sein kann und im allgemeinen etwa 0,05 bis 0,5 mm beträgt. Falls die Aussenschicht kein Flammschutzmittel enthält, wird die flammwidrige Eigenschaft der gesamten Aderisolation von der Innenschicht getragen. Dementsprechend ist es wichtig das Volumenverhältnis, resp. das Schichtdickenverhältnis der beiden Schichten aufeinander abzustimmen.

Beide Schichten zeigen robuste mechanische Eigenschaften. So besitzt insbesondere die Innenschicht eine hohe Zugfestigkeit und eine hohe Dehnung und die Aussenschicht eine hohe Abriebfestigkeit.

Während die Aussenschicht mindestens ein Polyesterelastomer und/oder ein mechanisch robustes Polymer aufweist, ist die Innenschicht so ausgebildet, dass sie ein gutes Aufnahmevermögen für Flammschutzmittel besitzt.

Die Polymere der Innen- und Aussenschicht sind erfindungsgemäss so gewählt, dass sie im auf den Leiter aufgezogenen, coextrudierten Zustand aufeinander haften, bzw. miteinander verbunden sind, und dadurch die mechanische Abriebfestigkeit der Aderisolierung erhöhen. Um die Haftung zwischen den beiden Schichten weiter zu erhöhen können dem mindestens einen Polymer der Innenschicht und/oder dem mindestens einen Polymer der Aussenschicht noch zusätzlich ein Verträglichkeitsvermittler (z. B. ein Blockcopolymer) oder ein reaktives Terpolymer, das eine Verbindung funktioneller Gruppen zwischen den Schichten erlaubt, beigemischt werden.

Das gesamte Eigenschaftsprofil der erfindungsgemässen Aderisolation wird durch eine Aufgabenteilung der beiden Schichten erfüllt. Die Aussenschicht hat die Aufgabe, den elektrischen Leiter vor chemischen (Öl, Diesel, Frostschutz, Batteriesäure, usw.) und mechanischen (Abrieb, Kerbfestigkeit) Einflüssen zu schützen. Die Innenschicht hat vorallem die Aufgabe, die flammwidrigen und die elektrischen Eigenschaften der Aderisolation sicher zu stellen. Für die gute Langzeittemperaturbeständigkeit (Alterungseigenschaften) der Isolation sind beide Schichten in gleichem Masse verantwortlich.

Als Polyolefine für die Bildung der Innenschicht im Sinne der Erfindung kommen folgende Polymergruppen in Frage:
- Polyethylen Copolymere, wie zum Beispiel Ethylen-Vinylacetat (EVA), Ethylen-Methylacrylat (EMA), Ethylen-Butylacrylat (EBA), Ethylen-Ethylacrylat (EEA), Ethylen-Propylen Gummi (EPR), Ethylen-Propylen-Dien (EPDM);
- Polyethylen Homopolymere, wie zum Beispiel Very low density Polyethylen (VLDPE) mit einer Dichte < 0,920 g/cm³;
- Maleinsäureanhydrid(MAH)-Terpolymere auf EVA, EMA, EBA, EEA, EPR, EPDM oder PE Basis; sowie
- Glycidylmethacrylat(GMA)-Terpolymere auf EVA, EMA, EBA, EEA, EPR, EPDM oder PE Basis.

Als Polyethylen Copolymere eignen sich insbesondere
- die EVA-Polymere Elvax (Du Pont), Levapren (Bayer) und Greenflex (Enichem);
- die EMA-Polymere Borflex (Borealis), Lotryl (Atochem) und Vamac (Du Pont);
- die EBA-Polymere Borflex (Borealis) und Lotryl (Atochem);
- das EEA-Polymer Borflex (Borealis);
- die EPR-Polymere Dutral (Enichem) und Keltan (DSM) und
- die EPDM-Polymere Nordel (Du Pont/Dow) und Keltan (DSM).

Als Polyethylen Homopolymere kommen Engage (Du Pont/Dow) und Exact (EXXON), als Maleinsäureanhydrid(MAH)-Terpolymere Polybond (Uniroyal), Fusabond (Du Pont), Admer (Mitsui) sowie Exxelor (EXXON) und als Glycidylmethacrylat(GMA)-Terpolymere Lotader GMA (Atochem) und Evaloy AM in Frage.

Das zur Bildung der Innenschicht dienende Ausgangsmaterial besitzt als wesentlichen Bestandteil einen der vorstehend genannten Polymere oder ein Gemisch bestehend aus mindestens zwei Polymeren dieser Art. Polymergemische, auch Polymer-Blends genannt, dienen im hier vorliegenden Fall insbesondere dazu, die Haftung der Aussenschicht auf der Innenschicht zu erhöhen.

Ausser dem mindestens einen Polymer besitzt das Innenschicht-Ausgangsmaterial grosse Mengen an halogenfreien Flammschutzmitteln, wie zum Beispiel Aluminiumhydroxid oder Magnesiumhydroxid, sowie kleinere Mengen an Additiven wie Antioxidantien, Hydrolyseschutzmittel, Verarbeitungshilfsmittel, Vernetzungshilfsmittel und Kupplungsmittel.

Falls der elektrische Leiter aus einem Kupferdraht besteht, kann die Innenschicht noch zusätzlich mit Kupferdesaktivatoren gegen thermooxidativen Abbau (Alterung) stabilisiert werden.

Eine Richtrezeptur für das Innenschicht-Ausgangsmaterial lässt sich wie folgt definieren:

| | |
|---|---|
| 30-40 Gew.% | Polymer-Blend |
| 40-70 Gew.% | Aluminiumhydroxid (ATH) |
| 00-10 Gew.% | Additive |

Als für die Bildung der Aussenschicht im Sinne der Erfindung besonders geeignete Materialien haben sich
- Polyesterelastomere, wie die Polyether-Polyester, so zum Beispiel das Hytrel (Du Pont);
- polare, mechanisch robuste Polymere, wie Polybutylent erphthalate (PBTP), deren Copolymere und aus diesen gebildete Blends, so zum Beispiel Vestodur, Celanex und Vandar; und
- High Density Polyethylene (HDPE)
erwiesen.

Das zur Bildung der Aussenschicht dienende Ausgangsmaterial besitzt als wesentlichen Bestandteil ein Polymer ausgewählt aus einem dieser drei Gruppen. Das Aussenschicht-Ausgangsmaterial kann aber auch ein Gemisch aus mindestens zwei aus diesen Gruppen ausgewählten Polymeren sein.

Ferner kann die Aussenschicht der erfindungsgemässen Aderisolierung auch kleinere Mengen an Additiven wie Antioxidantien, Hydrolyseschutzmittel, Verarbeitungshilfsmittel und Vernetzungshilfsmittel besitzen oder - je nach Dimension des Elektrokabels - und zusätzlich Flammschutzmittel enthalten.

Erfindungsgemäss ist das mindestens eine Polymer der Innenschicht strahlenvernetzt. Will man im Rahmen der Erfindung auch das mindestens eine Polymer der Aussenschicht vernetzen, so müssen dem Aussenschicht-Ausgangsmaterial noch zusätzlich niedermolekulare Vernetzungshilfsmittel beigemischt werden. Gegenüber den Polymeren der Innenschicht sind nämlich sämtliche Polymere der Aussenschicht schwer vernetzbar. Erst durch das Einarbeiten der Vernetzungshilfsmittel ist es möglich, die Aussenschicht-Polymere mit vernünftiger Dosis, zum Beispiel mit einer Dosis von 10-25 Mrad, zu vernetzen.

Eine Richtrezeptur für das Aussenschicht-Ausgangsmaterial lässt sich wie folgt definieren:

| | |
|---|---|
| 35-80 Gew.% | Aussenschicht-Polymer |
| 00-30 Gew.% | Vernetzungshilfsmittel |
| 00-20 Gew.% | Hydrolyseschutzmittel |
| 00-05 Gew.% | Antioxidantien |
| 00-10 Gew.% | Verarbeitungshilfsmittel |
| 00-40 Gew.% | Flammschutzmittel |

Was die Verwendung von Polyethylen (PE) als Aussenschichtmaterial betrifft, sei an dieser Stelle folgendes vermerkt. Eine PE-Aussenschicht ist keine Ölbarriere-Schicht im engeren Sinne. So lässt sie mit der Zeit das Öl ungehindert hindurchdiffundieren. Die kristallinen Phasen des PE können diesen Diffusionsvorgang nur verlangsamen aber nicht verhindern. Je höher jedoch die Dichte des PE ist, umso härter (steifer) ist das Material, und umso besser dessen Abriebbeständigkeit und Chemikalienbeständigkeit. Dies gilt auch für die Ölbeständigkeit. Das Öl greift nämlich nur die lockere amorphe Phase an, und bringt diese zum Quellen. Aus diesen Gründen kommen erfindungsgemäss nur vernetzte HDPE als Aussenschicht-Ausgangsmaterialien in Frage, welche eine hohe Dichte, ein für dünnwandige Extrusion gutes Fliessverhalten und für eine gute Vernetzbarkeit einen niederen MFI aufweisen.

Beispiele von HDPE sind die folgenden:

| HDPE | Dichte-MFI (190/2,16) | Schmelztemperatur | Kristallinität |
|---|---|---|---|
| Lupolen 6021D | HDPE 0,960 - 0,2 | 141°C | 70 % |
| Lupolen 6031M | HDPE 0,964 - 8,0 | 146°C | 72 % |
| NCPE 1101 | HDPE 0,965 - 7,5 | | |
| Vestolen A6013 | HDPE 0,959 - 2,0 | | |
| Vestolen A6012 | HDPE 0,958 - 0,9 | | |

Die erfindungsgemässen Elektrokabel zeigen folgende physikalische Eigenschaften:
- Sie besitzen eine hohe mechanische Festigkeit, was u.a. auf die zähelastischen Eigenschaften der Polymeraussenschicht zurückzuführen ist. Sie lassen sich vor allem problemlos in der Autoindustrie einsetzen und zeigen eine ausgezeichnete Abriebbeständigkeit, sowie eine hohe Kerb- und Zugefestigkeit.
- Flammwidrigkeitsprüfungen wurde von der doppelschichtigen Aderisolierung bestens erfüllt.
- Die Dauerwärmebeständigkeit der erfindungsgemässen Elektrokabel beträgt bei 3000 Betriebsstunden von 125°C bis 150°C. Die tiefste Einsatztemperatur ist mindestens -40°C.
- Die erfindungsgemässen Elektrokabel sind nicht nur ölbeständig. Sie sind auch beständig gegenüber anderen Chemikalien, wie zum Beispiel Frostschutzmittel, Batterieflüssigkeiten, Scheibenwaschmittel, Bremsflüssigkeiten, Reinigungsmittel, Motor-, Getriebe-, und Hydraulikflüssigkeiten und Benzin.

In den nachfolgenden Tabellen 1 und 2 sind nun Beispiele für die Zusammensetzung der Innen- bzw. Aussenschicht angegeben, die im Rahmen der Erfindung ohne Einschränkung miteinander kombinierbar sind.

**Tabelle 1:**

| Innenschicht-Rezepturen | |
|---|---|
| Rezeptur | Grundrezept in Gew.% |
| Rezeptur 1 | Rest MAH-Terpolymer, z.B. Lotader 4700 |
| | 40-70 % ATH, z.B. Martinal OL 107 LE |
| | 0,1-5 % Antioxidantien, z.B. Irganox 1010 |
| | |
| Rezeptur 2 | Rest GMA Polymer, z.B. Lotader GMA |
| | 40-70 % ATH, z.B. Martinal OL 104 LE |
| | 0,1-5 % Antioxidantien, z.B. Anox 20 |
| | |
| Rezeptur 3 | 19-40 % Acrylkautschuk, z.B. Vamac DLS |
| | 10-30 % Polyester Elastomer, z.B. Hytrel 4056 |
| | 40-70 % Aluminiumhydroxid, z.B. Martinal OL 107 LE |
| | 0,1-2 % Kupplungsmittel A, z.B. Silquest PC-1A |
| | 0,1-2 % Kupplungsmittel B, z.B. Silquest PC-1B |
| | 0,1-5 % Antioxidantien, z.B. Ralox 630 |
| | 0,1-7 % Polymer-Wachs, z.B. Luvax EVA2 |
| | |
| Rezeptur 4 | Rest EVA, z.B. Elvax 470 |
| | 30-70 % Magnesiumhydroxid, z.B. Magnifin H7 |
| | 0,1-2 % Silan A, z.B. Silquest PC-1A |
| | 0,1-2 % Silan B, z.B. Silquest PC-1B |
| | 0,1-5 % Antioxidantien, z.B. Irganox 1330 |
| | |
| Rezeptur 5 | Rest EVA, z.B. Greenflex ML50, Evatane 2403 |
| | 40-75 % ATH, z.B. Martinal OL 104 LE, Apyral 40E |
| | 0,1-2 % Silan, z.B. Dynasilan VTMO, VTEO |
| | 0-0,2 % Peroxid, z.B. Interox TMCH-50, Trigonox C |
| | 0,1-5 % Antioxidantien, z.B. Dovernox 10, Irganox 1010, Vanox ZMTI, DLTDP |
| | 0-7 % Vernetzungshilfsmittel, z.B. Sartomer 350 |
| | |
| Rezeptur 6 | 20-40 % EVA, z.B. Evatane 2403 |
| | 2-20 % TPE, z.B. Hytrel 4056 |
| | 40-70 % ATH, z.B. Martinal OL 107 LE |
| | 0,1-2 % Silan, z.B. Dynasilan VTEO |
| | 0-2 % Peroxid, z.B. Trigonox 29 |
| | 0-5 % Alkyl-Silan, z.B. Dynasilan OCTEO |
| | 0,1-5 % Antioxidantien, z.B. ADK STAB AO-60 |
| | |
| Rezeptur 7 | Rest % VLDPE, z.B.Clerflex MQFO, CLDO, Engage 8452, 8411 |
| | 40-70 % ATH, z.B. Apyral 40E, Martinal OL104 LE (halogenfrei) |
| | 0,01-3 % Silan, z.B. Dynasilan 6598, VTEO, VTMO |
| | 0,0-2 % Peroxid, z.B. Interox TBPB, Trigonox 29, |
| | 0,0-3 % Antioxidantien, z.B. Anox 20, Vanox GT, CDA-6, Vanox ZMTI |
| | 0,0-2 % Verarbeitungshilfsmittel, z.B. Listab ZN, Loxiol G20 |
| | 0,0-3 % Vernetzungshilfsmittel, z.B. HVA-2, TAIC, Sartomer 350 |

**Tabelle 2:**

| Aussenschicht-Rezepturen | |
|---|---|
| Rezeptur | Grundrezept in Gew.% |
| Rezeptur A | Rest Polyesterelastomer, z.B. Hytrel 6356, Hytrel HTR 8303 |
| | 0,1-5 % Antioxidantien, z.B. Naugard 445, Hytrel 30HS |
| | 0-7 % Vernetzungshilfsmittel, z.B. Sartomer 350 |
| | 0-6 % Hydrolyseschutzmittel, z.B. Stabaxol P |
| | |
| Rezeptur B | Rest Polybutylenterphthalat, z.B. Vestodur 3020 |
| | 0-7 % Vernetzungshilfsmittel, z.B. Sartomer 350 |
| | 0,1-5 % Antioxidantien, z.B. Irganox 1330 |
| | |
| Rezeptur C | Rest % HDPE (Dichte: 0,950-0,970 g/cm³), z.B. Vestolen A60 13, Lupolen 6021D |
| | 0-40 % Flammschutzmittel, z.B. Exolit AP750, Magnifin H7 (halogenfrei) |
| | 0-5 % Antioxidantien, z.B. STAB A060, DSTDP, PEP-36, Seenox 412 S |
| | 0-3 % Vernetzungshilfsmittel, z.B. Photomer 4158, SR 355, SR494, SR 350 |
| | 0-5 % Verarbeitungshilfsmittel, z.B. Lupolen 6031M, NCPE1101 |

Es sei an dieser Stelle darauf hingewiesen, dass die vorstehend genannten Rezepturen für die erfindungsgemässe Aderisolierung nur eine Auswahl von mehreren möglichen Ausführungsformen darstellen und im Rahmen der Erfindung in verschiedener Hinsicht geändert werden können.

## Patentansprüche

1. Elektrokabel mit einem elektrischen Leiter und einer den Leiter umhüllenden, aus einer Innen- und einer Aussenschicht bestehenden Aderisolierung, deren Innenschicht aus einem halogenfreien, flammwidrigen Polymernetzwerk besteht und deren Aussenschicht mindestens zum Teil aus einem ölbeständigen Kunststoff gebildet wird, dadurch gekennzeichnet, dass die Aderisolierung ein Coextrudat ist, dass die Innenschicht als Flammschutzmittel ein Aluminiumhydroxid und/oder Magnesiumhydroxid und als Polymerbestandteil mindestens ein Polyolefin oder Polyorefin-blend besitzt, dass die Aussenschicht im wesentlichen durch einen Polyesterelastomer und/oder ein mechanisch robustes Polymer gebildet wird, und dass die Polymere der beiden Schichten so ausgewählt sind, dass letztere im extrudierten Zustand aneinander haften.

2. Elektrokabel nach Anspruch 1, dadurch gekennzeichnet, dass zur Erhöhung der Haftungsstärke die Innenschicht noch zusätzlich einen Verträglichkeitsvermittler oder ein reaktives Terpolymer besitzt.

3. Elektrokabel nach einem der Ansprüche 1 oder 2, dadurch gekennzeichnet, dass zur Erhöhung der Haftungsstärke die Aussenschicht noch zusätzlich einen Verträglichkeitsvermittler oder ein reaktives Terpolymer besitzt.

4. Elektrokabel nach einem der Ansprüche 1 bis 3, dadurch gekennzeichnet, das die Innenschicht noch zusätzlich Antioxidantien, Hydrolyseschutzmittel, Verarbeitungshilfsmittel und Kupplungsmittel aufweist.

5. Elektrokabel nach einem der Ansprüche 1 bis 4, dadurch gekennzeichnet, das die Aussenschicht noch zusätzlich Antioxidantien, Hydrolyseschutzmittel und Verarbeitungshilfsmittel aufweist.

6. Elektrokabel nach einem der Ansprüche 1 bis 5, dadurch gekennzeichnet, dass das mindestens eine Polymer der Innenschicht zu einer der folgenden Gruppen gehört:
- Polyethylen Copolymere, wie zum Beispiel Ethylen-Vinylacetat (EVA), Ethylen-Methylacrylat (EMA), Ethylen-Butylacrylat (EBA), Ethylen-Ethylacrylat (EEA), Ethylen-Propylen Gummi (EPR), Ethylen-Propylen-Dien (EPDM);
- Polyethylen Homopolymere, wie zum Beispiel Very low density Polyethylen (VLDPE) mit einer Dichte < 0,920 g/cm³;
- Maleinsäureanhydrid(MAH)-Terpolymere auf EVA, EMA, EBA, EEA, EPR, EPDM oder PE Basis; sowie
- Glycidylmethacrylat (GMA)-Terpolymere auf EVA, EMA, EBA, EEA, EPR, EPDM oder PE Basis.

7. Elektrokabel nach einem der Ansprüche 1 bis 6, dadurch gekennzeichnet, dass das mindestens eine Polymer der Aussenschicht zu einer der beiden folgenden Gruppen gehört:
- Polyether-Polyester;
- Polybutylenterphthalate (PBTP), deren Copolymere und die aus diesen gebildeten Blends.

8. Elektrokabel nach Anspruch 7, dadurch gekennzeichnet, dass die Aussenschicht ebenfalls vernetzt ist.

9. Elektrokabel nach einem der Ansprüche 1 - 7, wobei die Aussenschicht allenfalls vernetzt ist, dadurch gekennzeichnet, dass mindestens eine Polymere der Aussenschicht ein High Density Polyethylen ist.

10. Elektrokabel nach Anspruch 9, dadurch gekennzeichnet, dass die Dichte der High Density Polyethylen grösser ist als 0,940 g/cm³.
